# EUROPÄISCHE PATENTSCHRIFT

(11) **EP 3 218 287 B1**
(45) Veröffentlichungstag und Bekanntmachung des Hinweises auf die Patenterteilung: **26.06.2019**
(21) Anmeldenummer: 15819789.7
(22) Anmeldetag: 18.12.2015
(51) Int. Cl.: B65D 88/28, B65D 88/54, B65G 53/66, B65G 65/46

(54) **VERFAHREN ZUM AUSGLEICH DES GASDRUCKES IN EINEM MASSENFLUSSTRICHTER UND MASSENFLUSSTRICHTER**
METHOD FOR EQUALIZING THE GAS PRESSURE IN A HOPPER AND HOPPER
PROCÉDÉ PERMETTANT D'ÉQUILIBRER LA PRESSION GAZEUSE DANS UNE TRÉMIE ET TRÉMIE

(30) Priorität: 15.11.2014 DE 102014016871
(43) Veröffentlichungstag der Anmeldung: 20.09.2017
(73) Patentinhaber: KHD Humboldt Wedag GmbH, 51067 Köln (DE)
(72) Erfinder: AßMUS, Reinhard, 06846 Dessau-Rosslau (DE); WAGNER, Eberhard, 06862 Dessau-Rosslau (DE)
(86) Internationale Anmeldenummer: PCT/EP2015/002548
(87) Internationale Veröffentlichungsnummer: WO 2016/074797

(56) Entgegenhaltungen:
- WO-A1-2007/072081
- DE-A1- 2 325 189
- DE-U1- 8 901 136
- US-A- 3 188 144

## Beschreibung

Die Erfindung betrifft ein Verfahren zum Ausgleich des Gasdruckes in einem Massenflusstrichter zum Austragen eines feinkörnigen, fluidisierbaren Schüttgutes aus einem Silo, wobei der Massenflusstrichter mindestens einen zumindest teilweise nach unten offenen Druckentlastungseinbau oder mindestens einen Innentrichter, der durch mindestens einen vertikalen, nach oben geschlossenen und nach unten offenen Kanal gegen die Wandung des Massenflusstrichters abgestützt ist, aufweist; die Erfindung betrifft ferner einen korrespondierenden Massenflusstrichter zum Austragen eines feinkörnigen, fluidisierbaren Schüttgutes aus einem Silo, aufweisend mindestens einen zumindest teilweise nach unten offenen Druckentlastungseinbau oder mindestens einen Innentrichter.

Zum Speichern von Schüttgütern werden Silos eingesetzt. Silos werden von oben befüllt, während durch eine Öffnung am unteren Ende je nach Bedarf eine Entnahme, meist durch schwerkraftbedingte Ausbildung eines Schüttgutauslaufstromes, stattfindet. In der Regel erfolgt die Abgabe auf ein Förderorgan, wie zum Beispiel einen Schneckenboden mit Schneckenwendeln, als Austragsgerät, mit dem das ausgelaufene Schüttgut abgezogen wird. Während der Entnahme aus dem Silo bilden sich in Abhängigkeit von der Geometrie des Silos, der Füllhöhe, der Schüttdichte sowie von Art und Zusammensetzung des Schüttgutes geometrisch und dynamisch komplexe Massenströme im Silo aus. Um entgegen einer unkontrolliert schwankenden Entnahme eine Vergleichmäßigung des Schüttgutauslaufstromes hinsichtlich Ausflussmenge pro Zeiteinheit (aber auch hinsichtlich Schwankungsbreiten bei Parametern wie Dichte, Partikelgrößenverteilung und Anteilsmischung) zu erreichen, rüstet man Silos im unteren Bereich mit relativ steilen Trichtern aus. Auch bei trichterförmig gestalteten Auslaufbereichen kann es zu Auslaufstörungen kommen. Insbesondere behindert die Ausbildung von Schüttgutbrücken, die sich fließhindernd über die untere Auslaufzone spannen, oder von Schächten, die nur Materialfluss in einem engen vertikalen Schacht zulassen, einen gleichmäßigen Schüttgutfluss aus dem Silo. Für die Speicherung feinkörniger, kohäsiver Schüttgüter werden häufig zur Vermeidung der genannten Auslaufstörungen pneumatische Austragshilfen vorgesehen (siehe z.B. die Druckschrift DE 299 00 434 U1; und Dietmar Schulze: Grundlagen und Möglichkeiten der Schüttguttechnik, Teil 5, in: Schüttgut. Informationen für die Schüttgutindustrie, Nr. 6, Sept. 1994). Durch im Trichterbereich angeordnete Belüftungselemente wird zumeist kontinuierlich Luft eingeblasen, so dass insbesondere die Wandreibung verringert und das Schüttgut aufgelockert wird. Auch in solchen pneumatisch belüfteten Silos kann es jedoch zu Problemen im Materialfluss und entsprechenden Auslaufstörungen kommen, wenn das Schüttgut sehr fein ist und zur Bildung von Kanälen, in denen Material mit hoher Geschwindigkeit strömt (sogenanntes Schießen), neigt. In diesem Falle durchströmt die eingeblasene Luft das Schüttgut nicht mehr gleichmäßig, es kann unkontrolliert schießen, der Schüttgutauslaufstrom schwankt stark, und es können Probleme beim Erreichen der vollständigen Entleerung des Silos, insbesondere bei Silos mit flachen Böden, entstehen.

So wird in der Druckschrift DE 2 325 189 A ein Mehrkammersilo gelehrt, bei dem in eine Silozelle mit kegelförmigem Boden und einem über der Entleerungsöffnung angeordnetem Brechkegel zur Auflockerung des Silogutes bei der Entleerung Luft zugeführt wird. Zum Abbau des dadurch entstehenden Überdrucks sind eine Entlüftungsleitung, die zur Entlüftung Luft vom oberen Bereich der Silozelle in den oberen Bereich der darüber liegenden Silozelle und von dort dann über einen Abluftfilter in den Außenraum führt, und, für hohe Überdrücke, eine Explosionsklappe vorgesehen. Etwaig entstehenden Gasunterdrücken im Silogut wird damit nicht entgegen gewirkt.

In der Druckschrift US 3 188 144 A wird eine Vorrichtung für das Abführen von pulverförmigen oder körnigen Gütern aus einem Silo mit trichterförmigem Bodenbereich gelehrt, wobei oberhalb des für die Entleerung dienenden Sammelkanals Kammern eingesetzt sind, die eine Druckentlastung bewirken. Das Gesamtsystem, insbesondere bestehend aus Boden, einer Abdeckung, Öffnungsschlitz und den Kammern, sind in Größe und Neigung so dimensioniert, dass zunächst kein Gut abfließen kann. Zur Bewirkung eines möglichst kontrollierten Abfließens wird im Bereich des Bodens sowie der Kammern Luft zur Fluidisierung des Gutes eingeströmt. Zum Abführen überschüssiger Luft aus dem Bereich unterhalb der Kammereinbauten und zum gleichmäßigen Aufrechterhalten des dort gebildeten Luftpolsters führt eine Abluftleitung von dort zum oberen Silobereich als Entstaubungsstufe. Auch hier werden keine Maßnahmen gegen möglicherweise entstehende Gasunterdrücke im Silogut in Betracht gezogen.

Für sehr feinkörniges Schüttgut werden daher als Trichter Massenflusstrichter (ohne pneumatische Belüftung) eingesetzt (s. Dietmar Schulze: Pulver und Schüttgüter, Berlin / Heidelberg, 2. Aufl. 2009, Kap. 10-11). Die Ausbildung von Massenflüssen beim Schüttgutaustrag aus dem Silo, bei denen der gesamte Siloinhalt in Bewegung gerät, ist hinsichtlich des Auftretens von Fließstörungen weit weniger problematisch als bei Kernflüssen, bei denen nur in einer nahezu vertikal ausgerichteten Kernzone Schüttgut fließt, während es um die Kernzone herum zur Ausbildung von sogenannten Totzonen mit Schüttgut kommt, das weitgehend unbewegt bleibt. Die Realisierung eines Massenflusstrichters erfordert dabei insbesondere das Vorsehen von Trichterwänden mit geeigneter (für die Art des Schüttgutes angepasster) und dabei vergleichsweise hoher Steilheit.

Wie sich gezeigt hat, können jedoch auch Massenflusstrichter bzw. Massenflusssilos Auslaufstörungen aufweisen. Vor allem kann es zum Phänomen des Schießens kommen, so dass große Auslaufströme unkontrolliert mit hoher Geschwindigkeit ausfließen, die auch durch vergleichsweise dicht schließende Austragsgeräte wie Zellenradschleusen und Austragsschnecken nicht gestoppt werden können. Neben einer für Entlüftung zu geringen Verweilzeit des Schüttguts im Silo nach der Befüllung und neben der Anwendung nicht gleichmäßig abziehender Austragsgeräte ist vor allem die Entstehung eines hohen Unterdrucks im Massenflusstrichter Ursache für das Schießen im Massenflusssilo. Der Unterdruck entsteht durch Bildung eines Hohlraums im Trichterbereich, so dass Umgebungsluft entgegen dem Schüttgutaustrittsstrom in das Silo gesaugt wird. Handelt es sich um fluidisierbares Schüttgut, also um Schüttgut, das bei einer solchen Durchströmung mit Luft leicht in einen hinsichtlich seiner Fließeigenschaften flüssigkeitsähnlichen Zustand versetzt wird, reicht die Zeit für eine Entlüftung des Schüttgutes nicht aus, und das Schüttgut schießt wie eine Flüssigkeit ungebremst aus der Austragsöffnung. Fluidisierung tritt bei Schüttgütern auf, die sehr feinkörnig sind und eine geringe Reindichte (Dichte des einzelnen Partikels) besitzen; nach Klassifizierung gemäß Geldart (D. Geldart: Types of fluidization, in: Powder Technology, 7 (1973), S. 285-292) handelt es sich um Schüttgüter der Klassen A und C (im Grenzbereich zu A).

Fließstörungen in Form von Schießen treten ebenfalls auf, wenn Silos nach dem Konzept des 'Expanded Flow' (A. W. Jenike: Storage and Flow of Solids, Bulletin 123 of the Utah Engineering Experiment Station, Univ. of Utah, rev. 1964/1980) eine (hinsichtlich der Trichterhöhe gegenüber Massentrichtern günstige) Kombination von zunächst einem weniger steilem Kernflusstrichter und einem darunter anschließenden, steilen Massenflusstrichter aufweisen.

Festzuhalten ist, dass die beschriebenen Fließstörungen auch bei Vorliegen an sich vorteilhafter Druckentlastungseinbauten oder Innentrichter auftreten können. Oberhalb der Austragungsöffnung angeordnete Druckentlastungseinbauten, wie Entlastungsbalken (bspw. in der DE 2 253 607 A beschrieben) oder rotationssymmetrische Verdrängungskörper, bewirken nicht nur eine Reduzierung des auf die Austragsgeräte bzw. Förderorgane lastenden Druckes; insbesondere wird dadurch auch der auf das Schüttgut wirkende und zu Verfestigungen führende Vertikaldruck im Trichterbereich vermindert. Ferner ist es bekannt (s. Dietmar Schulze: Pulver und Schüttgüter, Berlin / Heidelberg, 2. Aufl. 2009, Kap. 11), in weniger steile und daher an sich keinen Massenfluss bewirkende Silotrichter Innentrichter einzubauen, deren Steilheit dann den Fließbereich erweitert, so dass sich ein Massenflusseffekt einstellt; dieses Konzept ist auch als 'Binsert' bekannt (J.R. Johanson: Controlling flow patterns in bins by use of an insert, in: Bulk Solids Handling 2 (1982), S. 495-498). Ähnlich lehrt auch die Druckschrift DE 89 01 136 U1 einen Schüttgutbehälter mit Auslauftrichter, in dem mittig ein Verteilerkonus angeordnet ist, welcher zur Vergleichmäßigung des Auslaufstroms mit besonderen Gleitelementen versehen ist, in deren Hohlräume Gas als Fluidisierungsmittel eingeleitet wird.

Aus der Druckschrift WO 2007/072081 A1 sind Verfahren zum Verbessern eines Volumenstroms von Partikeln durch Leitungen bekannt, die insbesondere auf Druckmessung durch Sensoren in der Leitung und auf das hierdurch gesteuerte oder geregelte Abziehen von Gas aus oder Einströmen von Gas in den Strom beruhen.

Aufgabe der Erfindung ist es daher, ein Verfahren zum Ausgleich des Gasdruckes in einem Massenflusstrichter zum Austragen eines feinkörnigen, fluidisierbaren Schüttgutes aus einem Silo anzugeben, so dass sich kein in Folge von Gasdruckdifferenzen auftretendes Schießen von Schüttgutauslaufströmen einstellen kann; ferner gehört es zur Aufgabe der Erfindung, einen korrespondierenden Massenflusstrichter zum Austragen eines feinkörnigen, fluidisierbaren Schüttgutes aus einem Silo mit Vorrichtungen für einen solchen Druckausgleich vorzuschlagen.

Die erfindungsgemäße Aufgabe wird durch ein Verfahren zum Ausgleich des Gasdruckes in einem Massenflusstrichter zum Austragen eines feinkörnigen, fluidisierbaren Schüttgutes aus einem Silo mit den Merkmalen des Anspruchs 1 und durch einen Massenflusstrichter zum Austragen eines feinkörnigen, fluidisierbaren Schüttgutes aus einem Silo mit den Merkmalen des Anspruchs 5 gelöst. Weitere vorteilhafte Ausgestaltungen sind in den Unteransprüchen zu Anspruch 1 und in den Unteransprüchen zu Anspruch 5 angegeben.

Nach der Erfindung ist also ein Vermindern der Druckdifferenz zwischen dem Gasdruck innerhalb des sich im Fließzustand befindlichen Schüttgutes und dem Gasdruck in der äußeren Umgebung oder im Oberraum des Silos mittels mindestens einer Druckausgleichsleitung, und ein Eindüsen von Druckgas, bevorzugt Druckluft, in den Innenraum des Massenflusstrichters vorgesehen. Entsprechend ist für den korrespondierenden Massenflusstrichter nach der Erfindung also vorgesehen, dass mindestens eine Druckausgleichsleitung zur Verminderung der Druckdifferenz zwischen dem Gasdruck innerhalb des sich im Fließzustand befindlichen Schüttgutes und dem Gasdruck in der äußeren Umgebung oder im Oberraum des Silos vorgesehen ist und dass mindestens eine Düse zum Eindüsen von Druckgas, bevorzugt Druckluft, in den Innenraum des Massenflusstrichters vorgesehen ist.

Dem erfindungsgemäßen Vorschlag zufolge wird der Tendenz einer Hohlraumbildung, d.h. der Entstehung eines starken Unterdrucks im Bereich des Massenflusstrichters, und mithin der oben beschriebenen Ursache für ein Schießen fluidisierten Schüttguts zunächst durch eine Druckausgleichsleitung entgegengewirkt. Das untere, offene Ende der Druckausgleichsleitung wird dabei dort in den Einbauten (Druckentlastungseinbauten, Innentrichter) positioniert, wo aufgrund ihrer geometrischen, in der Regel nach oben geschlossenen und nach unten offenen bzw. luftdurchlässigen Form weitgehend Schüttgut freie, luft- bzw. gasgefüllte Hohlräume gegeben sind. Beim (nicht-schießenden) Ausfließen von Schüttgut aus dem Silo ist beim Gasdruck im Schüttgut und in den Einbauten ein relativer Unterdruck gegenüber dem atmosphärischen Druck außerhalb des Silos, wie er auch von unten auf die Austragsöffnung wirkt, gegeben. Das andere, obere Ende der Druckausgleichsleitung wird daher durch die Wandung in die äußere Umgebung des Silos geführt. Im Falle eines Gasunterdrucks im Massenflusstrichter wird von hier Luft, ggf. auch dafür vorgesehenes Gas, angesaugt, wodurch eine Verminderung, im Idealfall ein Ausgleich der Gasdruckdifferenz zwischen Innen- und Außenbereich des Trichters bewirkt wird. Als konstruktive Alternative ist es auch möglich, das obere Ende der Druckausgleichsleitung vorrangig dann in den von Schüttgut freiem Oberraum des Silos münden zu lassen, wenn dort ein atmosphärischer Druck wie außerhalb des Silos herrscht. Zweckmäßig können auch mehrere solcher Druckausgleichsleitungen vorgesehen werden.

Je nach Betriebszustand des Silos, abhängig u.a. von Füllhöhe, Dichte und Art des Schüttgutes sowie von der Größe der Auslauföffnung, kann jedoch der Prozess des Druckausgleichs durch die Druckausgleichsleitung gegenüber der Geschwindigkeit des Prozesses des Gasunterdruckaufbaus im Massenflusstrichter zu langsam verlaufen. Hierbei wird die Druckdifferenz lediglich vermindert. Im dynamischen Wechselspiel dieser Prozesse kann es ferner auch zu einer zunächst nur lokalen, nennenswerten Verminderung der Druckdifferenz kommen, nämlich im räumlichen Umfeld des Endes der Druckausgleichsleitung. Um den Schüttgutfluss nachteilhaft beeinflussende Unterdrücke zu vermeiden, muss daher im Verfahren der Gasdruck im Schüttgut bei Beginn und während einer Schüttgutauslaufphase hinreichend schnell und gleichmäßig im ganzen Innenraum des Massenflusstrichters auf den Umgebungsdruck außerhalb des Silos eingestellt werden. Überraschend hat sich in Versuchsreihen gezeigt, dass eine Beschleunigung und Vergleichmäßigung des Druckausgleichs dadurch erreicht werden kann, dass in Kombination zum Vorsehen der mindestens einen Druckausgleichsleitung Gas (u.a. aus Kosten- und Umweltgründen bevorzugt Luft) intervallartig oder kontinuierlich über Düsen in den Innenraum des Massenflusstrichters eingeblasen wird, ohne dass dabei, bedingt u.a. durch die im Normalfall geringeren Luftmengen, Fließprobleme wie im pneumatisch belüfteten Silo auftreten. Die Düsen werden hierfür an der Wandung des Massenflusstrichters und / oder an den Einbauten (Druckentlastungseinbauten, Innentrichter) vorgesehen. Wird die Druckluftzufuhr zu den einzelnen Düsen einzeln einstellbar gestaltet, kann gezielt eine Eindüsung an den Stellen bzw. in der Ebene des maximalen Gasunterdrucks im Schüttgut mit je geeigneter Menge pro Zeiteinheit vorgenommen werden. Die Größe und räumliche Verteilung des Unterdrucks werden dabei für ein konkretes Silo mit Massenflusstrichter insbesondere von den physikalischen Eigenschaften des Schüttguts, der Größe der Auslauföffnung, der Konstruktion der Austragsorgane und der Größe des Auslaufmassenstromes beeinflusst.

In dem Falle, dass der Massenflusstrichter mindestens einen zumindest teilweise nach unten offenen Druckentlastungseinbau, bspw. einen Entlastungsbalken oder einen rotationssymmetrischen Verdrängungskörper, aufweist, ist erfindungsgemäß ein Messen des Gasdruckes vorgesehen mit mindestens einem Druckmessgerät in mindestens einer separaten, weitgehend Schüttgut freien, in den Innenbereich des Druckentlastungseinbaus mündenden Leitung; ferner ist erfindungsgemäß ein Anordnen der mindestens einen Druckausgleichsleitung derart vorgesehen, dass ihr unteres, offenes Ende in den Innenbereich des Druckentlastungseinbaus reicht, wobei ihr oberes, in die äußere Umgebung oder in den Oberraum des Silos führendes Ende vorzugsweise mit einem luftdurchlässigen Filterschlauch verschlossen ist. Ein solcher Filterschlauch verhindert einen Staubaustritt in die Umgebung. Ebenso wirkt die Orientierung der Druckausgleichsleitung von innen unten nach außen oben einem möglichem Austritt kleiner Materialmengen entgegen. Aufschluss über die Gasdruckverhältnisse im Bereich des Massenflusstrichters geben Druckmessungen, vorzugsweise mit Messsonden, in hierfür eigens angeordneten, nach unten zumindest luftdurchlässigen, aufwärts gerichteten und daher weitgehend Schüttgut freien Leitungen. Diese sind insbesondere im Bereich der Gashohlräume der Druckentlastungseinbauten angeordnet, wobei eine Mehrzahl an Messsonden bzw. separaten Leitungen - verteilt nicht nur über den Umfang, sondern auch über eine geeignete Höhenstrecke - vorteilhaft für die darauf basierende Festlegung ist, an welcher Stelle welche Luftmenge einzudüsen ist. Durch geeignete Messsonden kann grundsätzlich auch an anderen Orten im Massenflusstrichter der Gasdruck bestimmt werden, wobei jedoch ein Schutz der Messeinrichtungen vor dem Druck und dem Aufprall der Schüttgutpartikel erforderlich ist.

In dem Falle, dass der Massenflusstrichter, entsprechend dem Binsert-Konzept, einen Innentrichter aufweist, ist erfindungsgemäß vorgesehen, dass der Innentrichter durch mindestens einen vertikalen, nach oben geschlossenen und nach unten offenen, vorzugsweise doppelwandigen Kanal gegen die Wandung des Massenflusstrichters abgestützt ist, dass ferner mindestens ein Druckmessgerät, vorzugsweise aufweisend mindestens eine Messsonde, für die Messung des Gasdruckes in dem mindestens einen vertikalen Kanal vorgesehen ist und dass erfindungsgemäß die Druckausgleichsleitung ein unteres und ein oberes Ende aufweist, wobei das untere Ende der mindestens einen Druckausgleichsleitung offen ist und in dem mindestens einen vertikalen Kanal angeordnet ist und wobei das obere Ende der mindestens einen Druckausgleichsleitung in vorteilhafter Ausgestaltung mit einem luftdurchlässigen Filterschlauch verschlossen ist und erfindungsgemäß in der äußeren Umgebung des Massenflusstrichters oder im Oberraum des Silos angeordnet ist. Das erfindungsgemäße Verfahren ist in diesem Falle also dadurch gekennzeichnet, dass die Messung des Gasdruckes im hohlen Innenraum eines solchen vertikalen Stützkanals stattfindet. Im Normalfall werden mehrere solcher vertikalen Kanäle aus statischen Gründen symmetrisch über den Umfang der Trichter verteilt angeordnet, so dass für eine räumlich besser auflösende Druckbestimmung eine Druckmessung in jedem der Kanäle vorteilhaft ist. Analog zum Falle der Druckentlastungseinbauten reicht erfindungsgemäß das untere Ende der Druckausgleichsleitung nunmehr in das Innere eines solchen vertikalen Kanals, wobei auch hier mehrere Druckausgleichsleitungen für die mehreren Kanäle vorteilhaft für die Gleichförmigkeit des Druckausgleichsprozesses sind.

Hinsichtlich der Menge der einzudüsenden Druckluft und der zeitlichen Erstreckung dieses Vorganges sieht eine Ausgestaltung der Erfindung ein gesteuertes, intervallartiges Eindüsen vor. Liegen aus Tests und bisherigem Betrieb des Massenflusssilos hinreichende Erfahrungswerte hinsichtlich der optimalen einzudüsenden Gas- bzw. Luftmenge und der zeitlichen Intervallgestaltung sowie ggf. des geeigneten Eindüsungsortes vor, brauchen diese Parameter mit der Steuerung nur gelegentlich, im Normalfall nur bei einer Veränderung des Betriebsmodus anders eingestellt zu werden. Ein Betriebsmodus ändert sich dabei insbesondere bei signifikanter Veränderung der Füllhöhe und der Durchsatzmenge des Schüttgutes sowie der Art, Zusammensetzung und physikalischen Beschaffenheit des Schüttgutes. Im Grenzfall reicht dabei bereits auch der Druckausgleich über die Druckausgleichsleitung aus. Bei dieser Ausgestaltung der Erfindung ist das erfindungsgemäße Verfahren also gekennzeichnet durch ein intervallartig erfolgendes Eindüsen von Druckgas, bevorzugt Druckluft, in den Innenraum des Massenflusstrichters, ferner durch ein in zeitlichen Abständen, etwa nur bei Wechsel des durch Füllhöhe und Durchsatzmenge des Schüttgutes gegebenen Betriebszustandes, erfolgendes Messen des Gasdruckes innerhalb des sich im Fließzustand befindlichen Schüttgutes, und durch ein Steuern der Eindüsung von Druckgas bzw. Druckluft durch ein Steuergerät, wobei die eingeblasene Druckgas- bzw. Druckluftmenge, die Dauer eines einzelnen Eindüsungsintervalles und die Abstände der Eindüsungsintervalle für den gemessenen Gasdruckwert und den gegebenen Betriebszustand zur Vermeidung einer Fluidisierung des Schüttgutes so gesteuert werden, dass erfahrungsgemäß ein vorab festgelegter (negativer) Unterdruckwert im weiteren Verlauf nicht unterschritten wird. Die Druckmessgeräte erlauben dabei eine Sicherheits- und Erfolgskontrolle des Vorganges hinsichtlich des angestrebten raschen und gleichmäßigen Druckausgleichs mit dem Umgebungsdruck.

Eine Alternative zu der Steuerung des Eindüsungsprozesses besteht in dem Einrichten einer Regelschleife. Bei dieser vorteilhaften Ausgestaltung der Erfindung ist das erfindungsgemäß vorgeschlagene Verfahren zum Ausgleich des Gasdruckes in einem Massenflusstrichter, durch den feinkörniges, fluidisierbares Gut aus einem Silo ausgetragen wird, gekennzeichnet durch ein kontinuierlich erfolgendes Messen des Gasdruckes innerhalb des sich im Fließzustand befindlichen Schüttgutes und durch ein Regeln des Gasdruckes innerhalb des sich im Fließzustand befindlichen Schüttgutes in einer Regelschleife mit dem Gasdruck als Regelgröße und dem eingedüsten, durch mindestens ein Ventil variierbaren Volumenstrom des Druckgases, bevorzugt Druckluft, als Stellgröße, wobei der Sollwert für den Gasdruck eingestellt wird zwischen einem oberen Grenzwert, unterhalb dessen ein Ausgleich von Unterdruck im Innenraum des Massenflusstrichters nur über die Druckausgleichsleitung nicht mehr schnell und gleichmäßig genug verläuft, und einem unteren Grenzwert, unterhalb dessen in Folge des vergleichsweise starken Unterdrucks eine Fluidisierung des Schüttgutes eintritt, und wobei der Gasdruck so geregelt wird, dass er zu keinem Zeitpunkt den unteren Grenzwert unterschreitet. Hierdurch wird ein hinreichender Druckausgleich durch geregeltes Eindüsen erreicht, ohne dass auch nur kurzfristig ein kritischer Unterdruck entsteht, bei dem die Gefahr eines Schießens des Schüttgutes gegeben ist. Vorteilhaft verfügt der Regler über eine Anzeige und Aufzeichnung der Gasdruckverhältnisse im Massenflusstrichter. Sollten im Massenflusstrichter im seltenen Falle relative Überdrücke entstehen, so ist die Regelschleife so eingerichtet, dass keine Eindüsung von Druckluft erfolgt. Ein Druckausgleich findet hierbei über die Druckausgleichsleitung statt.

Eine hierzu korrespondierende, vorteilhafte Ausgestaltung des erfindungsgemäßen Massenflusstrichters sieht vor, dass an der Wandung des Massenflusstrichters und / oder an dem Druckentlastungseinbau bzw. an dem Innentrichter mindestens eine Düse zum Eindüsen von Druckgas, bevorzugt Druckluft, in den Innenraum des Massenflusstrichters und für jede Düse mindestens ein Ventil zur Einstellung der Druckluftzufuhr zu der Düse vorgesehen sind, wobei der Gasdruck innerhalb des sich im Fließzustand befindlichen Schüttgutes als Regelgröße und der eingedüste Volumenstrom des Druckgases als Stellgröße in eine Regelschleife integriert sind.

In vorteilhafter Ausgestaltung der Erfindung ist das erfindungsgemäße Verfahren gekennzeichnet durch ein Eindüsen von Druckgas, bevorzugt Druckluft, in den Innenraum des Massenflusstrichters durch eine Mehrzahl von Düsen, wobei die Düsen an der Wandung des Massenflusstrichters entlang des Umfangs in unterschiedlichen Höhen verteilt angeordnet sind und / oder an dem mindestens einen Druckentlastungseinbau bzw. an dem mindestens einen Innentrichter angeordnet sind, und wobei die Druckluftzufuhr zu den Düsen durch Ventile für jede Düse einzeln variiert werden kann. Auf diese Weise kann sowohl im Steuerungs- als auch im Regelungsfall sichergestellt werden, dass durch vorrangiges Eindüsen im Bereich des größten Unterdruckes ein beschleunigter und gleichmäßiger Druckausgleich stattfindet.

Die Erfindung wird anhand der folgenden Figuren näher erläutert. Es zeigt:
- Fig. 1: einen erfindungsgemäßen Massenflusstrichter in Querschnittsdarstellung im Ausführungsbeispiel mit Entlastungsbalken und mit einem Silo gemäß dem 'Expanded Flow'-Konzept,
- Fig. 2: die Anordnung aus Figur 1, in der Darstellung um 90° gedreht, mit eingezeichneten Dilatanzbändern,
- Fig. 3: einen erfindungsgemäßen Massenflusstrichter in Querschnittsdarstellung im Ausführungsbeispiel mit Innentrichter,
- Fig. 4: schematische Querschnittsdarstellung des Ausführungsbeispiels aus Figur 3 entlang der horizontalen A-A-Ebene.

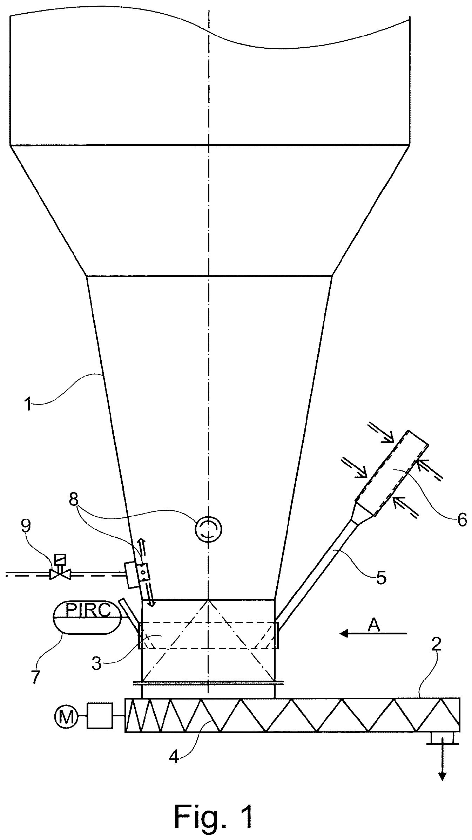

In **Figur 1** ist ein Beispiel gezeigt der erfindungsgemäßen Lösung für den Druckausgleich in einem Massenflusstrichter 1. Das Silo ist dabei nach dem Konzept des Expanded Flow ausgeführt, bei dem nur der untere Teil als Massenflusstrichter 1 ausgeführt ist. Für das Silo wurde als Austragsgerät ein Schneckenboden 2 mit vier parallelen Austragsschnecken gewählt. Darüber ist ein Entlastungsbalken 3 mit dreieckförmigem Querschnitt zur Druckentlastung der Schnecken installiert. Die Schnecken weisen im Auslaufbereich Schneckenwendeln 4 mit größer werdender Steigung auf, so dass, wie bekannt, das (feinkörnige, fluidisierbare) Schüttgut über die gesamte Einzugslänge der Schnecken gleichmäßig abgezogen wird.

Erfindungsgemäß wird seitlich in Achsrichtung der Schnecken eine unten offene Druckausgleichsleitung 5 in den Entlastungsbalken 3 eingeführt. Diese Druckausgleichsleitung 5 wird (typischerweise einige Meter) schräg nach oben geführt, so dass im Falle des Eindringens von Schüttgut in die Druckausgleichsleitung 5 in Folge eines Überdrucks im Trichterbereich keine größeren Materialmengen in die Umgebung gelangen können. Außerdem kann die Druckausgleichsleitung 5, wie abgebildet, am oberen Ende durch einen luftdurchlässigen Filterschlauch 6 verschlossen werden, um einen Staubaustritt in die Umgebung zu verhindern. Im Normalfall wird durch den Filterschlauch saubere Luft in den Massenflusstrichter 1 gesaugt, da beim Ausfließen des Schüttgutes aus dem Massenflusstrichter 1 ein Unterdruck entsteht. Lediglich im Falle des Schießens ist mit einem Überdruck zu rechnen.

Erfindungsgemäß wird der Gasdruck im Trichterbereich mit einem Druckmessgerät 7 gemessen. Wenn der gemessene Druck einen bestimmten Wert unterschreitet, wird eine kleine Druckluftmenge über ein oder mehrere Düsen 8, die an der Trichterwand oder an dem Entlastungsbalken 3 befestigt sind, in den Massenflusstrichter 1 eingeblasen. Die Düsen 8 werden am Umfang in verschiedenen Höhen angeordnet, so dass die Lufteindüsung im Bereich des größten Unterdruckes gleichmäßig erfolgt.

Die Luftzufuhr erfolgt geregelt bei Erreichen eines bestimmten Wertes für den Unterdruck im Massenflusstrichter 1 oder, ggf. gesteuert, in fest programmierten Zeitintervallen. Luft oder ein anderes geeignetes Gas werden durch Öffnung des Ventils 9 jedenfalls maximal nur solange eingeblasen, bis im Inneren der Gasdruck in Höhe des äußeren Umgebungsdruckes erreicht ist. Wird der Druck nicht wie im Falle einer Regelung kontinuierlich gemessen, so muss mindestens zur Inbetriebnahme oder während des laufenden Betriebes einmalig oder mehrmalig eine Gasdruckmessung erfolgen, um das Intervall der Zuschaltung der Düsen und die Dauer der Gaseinblasung festzulegen.

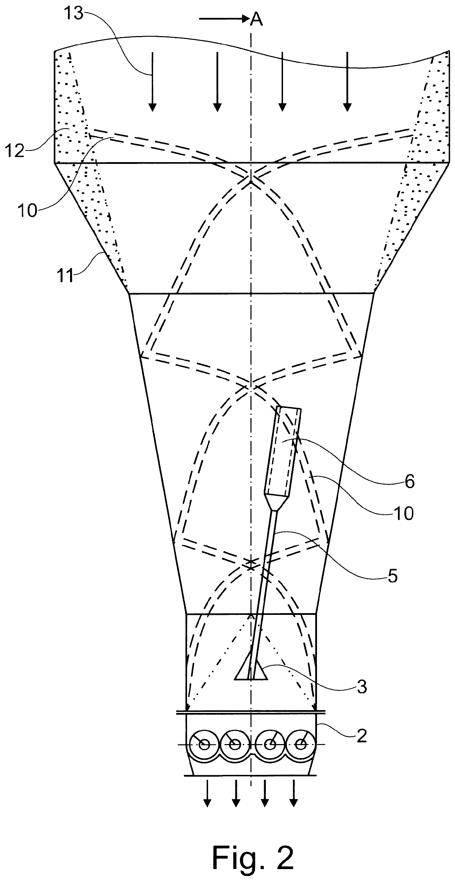

**Figur 2** zeigt die Siloanordnung aus **Fig. 1** in Seitenansicht, so dass insbesondere der dreieckförmige Querschnitt des Entlastungsbalkens 3 sowie die Druckausgleichsleitung 5 zu erkennen sind. Ferner sind sogenannte Dilatanzbänder 10 eingezeichnet, die sich häufig während des Ausflussvorganges einstellen. Dilatanzbänder 10 sind Zonen geringerer Schüttdichte im Vergleich zu den Zonen zwischen den Dilatanzbändern. Das körnige Schüttgut nämlich fließt nicht gleichmäßig wie eine Flüssigkeit aus dem Trichterbereich, sondern wird entlang von Scherflächen abgeschert. Entlang dieser Flächen treten Diskontinuitäten auf, in deren Folge es zu einer verstärkten Ausdehnung (Dilatanz) im Scherbereich kommt. Diese Ausdehnung führt zu einer Pumpwirkung, d.h. das Schüttgut fließt schneller ab, als die Zufuhr aus dem oberen Silobereich möglich ist. Dieser Effekt ist umso stärker, je höher der Auslaufmassenstrom ist. Deshalb kann es bei Überschreiten eines kritischen Auslaufmassenstroms zu einer Gasgegenströmung kommen, die zu einer Fluidisierung des feinkörnigen Schüttgutes führt, und schließlich zum unkontrollierten Schießen. Durch die Maßnahmen des erfindungsgemäßen Vorschlages eines Verfahrens zum Ausgleich des Gasdruckes kann der Unterdruck im Trichterbereich abgebaut werden, so dass die Gasströmung entgegen dem Schüttgutfluss unterbunden wird.

Bei einem Silo, das, wie abgebildet, nach den Regeln des Expanded Flow ausgelegt wurde, d.h. zwei Trichter unterschiedlicher Neigung aufweist, wobei der untere Trichter ein Massenflusstrichter 1 ist, reichen die Dilatanzbänder 10 bis in den vertikalen Siloabschnitt. Deshalb treten im oberen Trichter 11 und im Übergangsbereich vom oberen Trichter 11 zum Vertikalteil Totzonen 12 auf. Darüber fließt das Schüttgut mit nahezu gleicher Geschwindigkeit über den Siloquerschnitt als Pfropfenströmung 13. Rutschen die Böschungen entlang der Totzonen bei Unterschreiten eines Füllstandes ab, so ist mit einem Gasüberdruck zu rechnen. In diesem Fall wird durch Regelung keine Luft durch die Düsen 8 zugeführt.

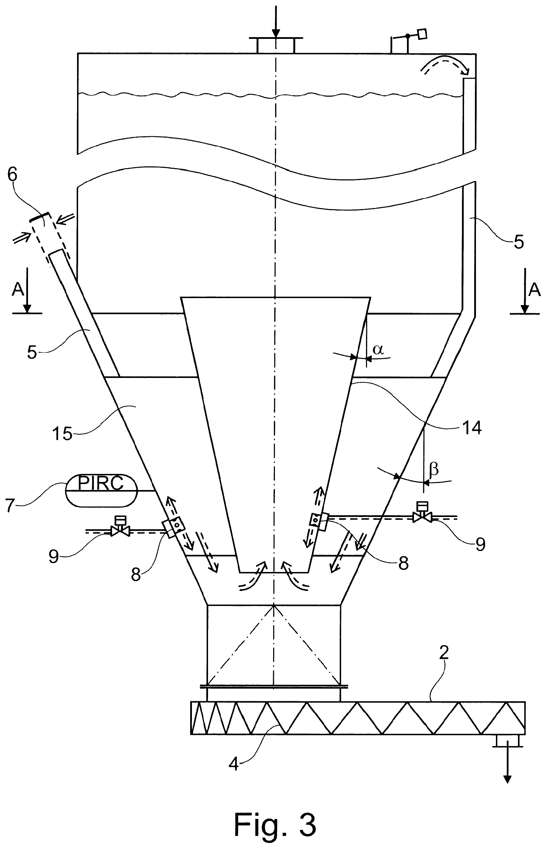

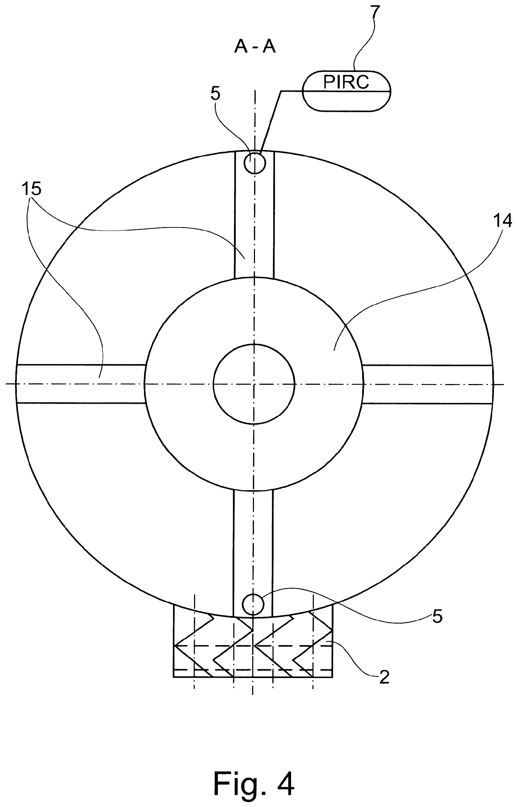

In **Figur 3** und im zugehörigen Querschnitt in **Figur 4** ist ein erfindungsgemäßes Ausführungsbeispiel dargestellt, bei dem statt des Entlastungsbalkens 3 ein Innentrichter 14 eingebaut ist. Dieses als 'Binsert' bekannte Konzept erweitert den Fließbereich im Trichterbereich, so dass auch mit weniger steilen Trichtern β > α der Massenflusseffekt erreicht wird. Erfindungsgemäß wird der Innentrichter 14 durch doppelwandige vertikale Kanäle 15 abgestützt. Diese Kanäle 15 sind unten offen und oben geschlossen. Ein Kanal 15 oder mehrere Kanäle 15 erhalten wiederum Druckausgleichsleitungen 5 zur Druckentlastung. Die Druckausgleichsleitung 5 ist in den oberen Silobereich geführt oder kann mit der Umgebung verbunden werden.

Erfindungsgemäß erfolgt die Gasdruckmessung mit einer Druckmesssonde 7 in einem oder mehreren vertikalen Kanälen 15, die den Innentrichter 14 abstützen. Auch bei dieser Ausführungsform wird zusätzlich zur angesaugten Umgebungsluft Druckluft über Düsen 8 eingeblasen, um einen weitgehenden Druckausgleich über den gesamten Querschnitt des Massenflusstrichters 1 zu realisieren. Die Düsen 8 können sowohl an der Außenwandung des äußeren Massenflusstrichters 1 als auch am Innentrichter 14 installiert sein.

**BEZUGSZEICHENLISTE**

| | | | |
|---|---|---|---|
| 1 | Massenflusstrichter | 11 | oberer Trichter |
| 2 | Schneckenboden | 12 | Totzone |
| 3 | Entlastungsbalken | 13 | Pfropfenströmung |
| 4 | Schneckenwendel | 14 | Innentrichter |
| 5 | Druckausgleichsleitung | 15 | vertikaler Kanal |
| 6 | Filterschlauch | | |
| 7 | Druckmessgerät | | |
| 8 | Düse | | |
| 9 | Ventil | PIRC | Druckregler mit Aufzeichnung und Anzeige |
| 10 | Dilatanzband | | |

## Patentansprüche

1. Verfahren zum Ausgleich des Gasdruckes in einem Massenflusstrichter (1) zum Austragen eines feinkörnigen, fluidisierbaren Schüttgutes aus einem Silo,
wobei der Massenflusstrichter (1) mindestens einen zumindest teilweise nach unten offenen Druckentlastungseinbau (3) oder mindestens einen Innentrichter (14), der durch mindestens einen vertikalen, nach oben geschlossenen und nach unten offenen Kanal (15) gegen die Wandung des Massenflusstrichters (1) abgestützt ist, aufweist,
**gekennzeichnet durch**
- Vermindern des relativen Gasunterdrucks innerhalb des sich im Fließzustand befindlichen Schüttgutes gegenüber dem Gasdruck in der äußeren Umgebung oder im Oberraum des Silos mittels mindestens einer Druckausgleichsleitung (5),
wobei die mindestens eine Druckausgleichsleitung (5) derart angeordnet wird, dass ihr unteres, offenes Ende in den Innenbereich des Druckentlastungseinbaus (3) reicht oder in den mindestens einen vertikalen Kanal (15) reicht und dass ihr oberes Ende in die äußere Umgebung oder in den Oberraum des Silos führt,
- Eindüsen von Druckgas, bevorzugt Druckluft, in den Innenraum des Massenflusstrichters (1), und **durch**
- Messen des Gasdruckes mit mindestens einem Druckmessgerät (7) in mindestens einer separaten, weitgehend Schüttgut freien, in den Innenbereich des mindestens einen zumindest teilweise nach unten offenen Druckentlastungseinbaus (3) mündenden Leitung oder mit mindestens einem Druckmessgerät (7) in dem mindestens einen vertikalen, nach oben geschlossenen und nach unten offenen Kanal (15).

2. Verfahren nach Anspruch 1,
**gekennzeichnet durch**
- intervallartig erfolgendes Eindüsen von Druckgas in den Innenraum des Massenflusstrichters (1),
- in zeitlichen Abständen, etwa nur bei Wechsel des **durch** Füllhöhe und Durchsatzmenge des Schüttgutes gegebenen Betriebszustandes, erfolgendes Messen des Gasdruckes innerhalb des sich im Fließzustand befindlichen Schüttgutes, und
- Steuern der Eindüsung von Druckgas **durch** ein Steuergerät, wobei die eingeblasene Druckgasmenge, die Dauer eines einzelnen Eindüsungsintervalles und die Abstände der Eindüsungsintervalle für den gemessenen Gasdruckwert und den gegebenen Betriebszustand zur Vermeidung einer Fluidisierung des Schüttgutes so gesteuert werden, dass erfahrungsgemäß ein vorab festgelegter Unterdruckwert im weiteren Verlauf nicht unterschritten wird.

3. Verfahren nach Anspruch 1,
**gekennzeichnet durch**
- kontinuierlich erfolgendes Messen des Gasdruckes innerhalb des sich im Fließzustand befindlichen Schüttgutes, und
- Regeln des Gasdruckes innerhalb des sich im Fließzustand befindlichen Schüttgutes in einer Regelschleife mit dem Gasdruck als Regelgröße und dem eingedüsten, **durch** mindestens ein Ventil (9) variierbaren Volumenstrom des Druckgases als Stellgröße,
- wobei der Sollwert für den Gasdruck eingestellt wird zwischen einem oberen Grenzwert, unterhalb dessen ein Ausgleich von Unterdruck im Innenraum des Massenflusstrichters (1) nur über die Druckausgleichsleitung (5) nicht mehr schnell und gleichmäßig genug verläuft, und einem unteren Grenzwert, unterhalb dessen in Folge des vergleichsweise starken Unterdrucks eine Fluidisierung des Schüttgutes eintritt, und
- wobei der Gasdruck so geregelt wird, dass er zu keinem Zeitpunkt den unteren Grenzwert unterschreitet.

4. Verfahren nach einem der Ansprüche 1 bis 3,
**gekennzeichnet durch**
Eindüsen von Druckgas in den Innenraum des Massenflusstrichters (1) durch eine Mehrzahl von Düsen (8),
- wobei die Düsen (8) an der Wandung des Massenflusstrichters (1) entlang des Umfangs in unterschiedlichen Höhen verteilt angeordnet sind und/oder
- im Falle, dass der Massenflusstrichter (1) mindestens einen Druckentlastungseinbau (3) aufweist, an dem mindestens einen Druckentlastungseinbau (3) angeordnet sind und/oder
- im Falle, dass der Massenflusstrichter (1) mindestens einen Innentrichter (14) aufweist, an dem mindestens einen Innentrichter (14) angeordnet sind, und
- wobei die Druckgaszufuhr zu den Düsen (8) **durch** Ventile (9) für jede Düse (8) einzeln variiert werden kann.

5. Massenflusstrichter (1) zum Austragen eines feinkörnigen, fluidisierbaren Schüttgutes aus einem Silo, aufweisend
mindestens einen zumindest teilweise nach unten offenen Druckentlastungseinbau (3) oder mindestens einen Innentrichter (14),
der durch mindestens einen vertikalen, nach oben geschlossenen und nach unten offenen Kanal (15) gegen die Wandung des Massenflusstrichters (1) abgestützt ist, mindestens eine Düse (8) zum Eindüsen von Druckgas, bevorzugt Druckluft, in den Innenraum des Massenflusstrichters (1),
**dadurch gekennzeichnet, dass**
- mindestens eine Druckausgleichsleitung (5) zur Verminderung des relativen Gasunterdrucks innerhalb des sich im Fließzustand befindlichen Schüttgutes gegenüber dem Gasdruck in der äußeren Umgebung oder im Oberraum des Silos vorgesehen ist,
- wobei die mindestens eine Druckausgleichsleitung (5) ein unteres und ein oberes Ende aufweist,
- wobei das untere Ende der mindestens einen Druckausgleichsleitung (5) offen ist und in dem Innenbereich des Druckentlastungseinbaus (3) oder in dem mindestens einen vertikalen Kanal (15) angeordnet ist, und wobei
- das obere Ende der mindestens einen Druckausgleichsleitung (5) in der äußeren Umgebung des Massenflusstrichters (1) oder während des Betriebs im Oberraum des Silos angeordnet ist, und dass
- mindestens ein Druckmessgerät (7) für die Messung des Gasdruckes in mindestens einer separaten, weitgehend Schüttgut freien, in den Innenbereich des mindestens einen zumindest teilweise nach unten offenen Druckentlastungseinbaus (3) mündenden Leitung oder mindestens ein Druckmessgerät (7) für die Messung des Gasdruckes in dem mindestens einen vertikalen, nach oben geschlossenen und nach unten offenen Kanal (15) vorgesehen ist.

6. Massenflusstrichter (1) nach Anspruch 5,
**dadurch gekennzeichnet, dass**
- an der Wandung des Massenflusstrichters (1) und/oder
- im Falle, dass der Massenflusstrichter (1) mindestens einen Druckentlastungseinbau (3) aufweist, an dem Druckentlastungseinbau (3) und/oder
- im Falle, dass der Massenflusstrichter (1) mindestens einen Innentrichter (14) aufweist, an dem Innentrichter (14)
mindestens eine Düse (8) zum Eindüsen von Druckgas in den Innenraum des Massenflusstrichters (1) und für jede Düse (8) mindestens ein Ventil (9) zur Einstellung der Druckgaszufuhr zu der Düse (8) vorgesehen sind,
wobei der Gasdruck innerhalb des sich im Fließzustand befindlichen Schüttgutes als Regelgröße und der eingedüste Volumenstrom des Druckgases als Stellgröße in eine Regelschleife integriert sind.

7. Massenflusstrichter (1) nach einem der Ansprüche 5 bis 6,
**dadurch gekennzeichnet, dass**
das obere Ende der mindestens einen Druckausgleichsleitung (5) mit einem luftdurchlässigen Filterschlauch (6) verschlossen ist.

## Claims

1. Method for equalizing the gas pressure in a mass flow hopper (1) for discharging a fine-grained, fluidizable bulk material from a silo,
wherein the mass flow hopper (1) has at least one at least partially downwardly open pressure relief fitting (3) or at least one internal hopper (14) which is supported against the wall of the mass flow hopper (1) by at least one vertical, upwardly closed and downwardly open channel (15),
**characterized by**
- reducing the relative negative gas pressure within the bulk material which is present in a state of flow with respect to the gas pressure in the external surroundings or in the upper space of the silo by means of at least one pressure equalization line (5),
wherein the at least one pressure equalization line (5) is arranged such that its lower open end extends into the internal region of the pressure relief fitting (3) or into the at least one vertical channel (15), and in that its upper end leads into the external surroundings or into the upper space of the silo,
- injecting pressurized gas, preferably pressurized air, into the interior of the mass flow hopper (1), and by
- measuring the gas pressure using at least one pressure measurement device (7) in at least one separate line, which is largely free of bulk material and which opens out into the internal region of the at least one at least partially downwardly open pressure relief fitting (3), or using at least one pressure measurement device (7) in the at least one vertical, upwardly closed and downwardly open channel (15).

2. Method according to Claim 1,
**characterized by**
- injecting at intervals pressurized gas into the interior of the mass flow hopper (1),
- measuring at time spacings, for example only in the event of a change in the operating state given by the fill height and throughput quantity of the bulk material, the gas pressure within the bulk material which is present in a state of flow, and
- controlling the injection of pressurized gas by way of a control device,
wherein, to avoid fluidization of the bulk material, the injected pressurized gas quantity, the duration of an individual injection interval and the spacings of the injection intervals for the measured gas pressure value and the given operating state are controlled such that, from experience, a pre-established negative pressure value is not fallen below subsequently.

3. Method according to Claim 1,
**characterized by**
- continuously measuring the gas pressure within the bulk material which is present in a state of flow, and
- regulating the gas pressure within the bulk material which is present in a state of flow in a regulating loop, with the gas pressure as a regulating variable and the injected volume flow of the pressurized gas, which volume flow is able to be varied by at least one valve (9), as a manipulated variable,
- wherein the target value for the gas pressure is set between an upper limit value, below which equalization of negative pressure in the interior of the mass flow hopper (1) only via the pressure equalization line (5) no longer proceeds sufficiently quickly and uniformly, and a lower limit value, below which fluidization of the bulk material occurs as a result of the relatively high negative pressure, and
- wherein the gas pressure is regulated such that it does not at any time fall below the lower limit value.

4. Method according to one of Claims 1 to 3,
**characterized by**
injecting pressurized gas into the interior of the mass flow hopper (1) by way of a plurality of nozzles (8),
- wherein the nozzles (8) are arranged on the wall of the mass flow hopper (1) in a manner distributed at different heights along the circumference and/or,
- in case the mass flow hopper (1) has at least one pressure relief fitting (3), are arranged on the at least one pressure relief fitting (3) and/or,
- in case the mass flow hopper (1) has at least one internal hopper (14), are arranged on the at least one internal hopper (14), and
- wherein the supply of pressurized gas to the nozzles (8) can be varied individually by way of valves (8) for each nozzle (8).

5. Mass flow hopper (1) for discharging a fine-grained, fluidizable bulk material from a silo, having
at least one at least partially downwardly open pressure relief fitting (3) or at least one internal hopper (14) which is supported against the wall of the mass flow hopper (1) by at least one vertical, upwardly closed and downwardly open channel (15),
at least one nozzle (8) for injecting pressurized gas, preferably pressurized air, into the interior of the mass flow hopper (1),
**characterized in that**
- provision is made of at least one pressure equalization line (5) for reducing the relative negative gas pressure within the bulk material which is present in a state of flow with respect to the gas pressure in the external surroundings or in the upper space of the silo,
- wherein the at least one pressure equalization line (5) has a lower end and an upper end,
- wherein the lower end of the at least one pressure equalization line (5) is open and is arranged in the internal region of the pressure relief fitting (3) or in the at least one vertical channel (15), and wherein
- the upper end of the at least one pressure equalization line (5) is arranged in the external surroundings of the mass flow hopper (1) or, during operation, in the upper space of the silo, and **in that**
- provision is made of at least one pressure measurement device (7) for the measurement of the gas pressure in at least one separate line, which is largely free of bulk material and which opens out into the internal region of the at least one at least partially downwardly open pressure relief fitting (3), or of at least one pressure measurement device (7) for the measurement of the gas pressure in the at least one vertical, upwardly closed and downwardly open channel (15).

6. Mass flow hopper (1) according to Claim 5,
**characterized in that** provision is made
- on the wall of the mass flow hopper (1) and/or,
- in case the mass flow hopper (1) has at least one pressure relief fitting (3), on the pressure relief fitting (3), and/or,
- in case the mass flow hopper (1) has at least one internal hopper (14), on the internal hopper (14)
of at least one nozzle (8) for injecting pressurized gas into the interior of the mass flow hopper (1) and, for each nozzle (8), of at least one valve (9) for setting the supply of gas to the nozzle (8),
wherein integrated into a regulating loop are the gas pressure within the bulk material which is present in a state of flow as a regulating variable and the injected volume flow of the pressurized gas as a manipulated variable.

7. Mass flow hopper (1) according to either of Claims 5 and 6,
**characterized in that**
the upper end of the at least one pressure equalization line (5) is closed off by an air-permeable filter hose (6).

## Revendications

1. Procédé permettant d'équilibrer la pression de gaz dans une trémie à flux massique (1) pour décharger d'un silo un produit en vrac à grain fin, fluidisable,
la trémie à flux massique (1) présentant au moins une installation de détente de pression (3) au moins en partie ouverte vers le bas ou au moins une trémie interne (14) qui est supportée par au moins un canal (15) fermé vers le haut et ouvert vers le bas contre la paroi de la trémie à flux massique (1),
**caractérisé par**
- la réduction de la dépression de gaz relative à l'intérieur du produit en vrac se trouvant à l'état fluide par rapport à la pression de gaz dans l'environnement extérieur ou dans l'espace supérieur du silo au moyen d'au moins une conduite d'équilibrage de la pression (5),
l'au moins une conduite d'équilibrage de la pression (5) étant disposée de telle sorte que son extrémité inférieure ouverte s'étende dans la région intérieure de l'installation de détente de pression (3) ou s'étende dans l'au moins un canal vertical (15) et de telle sorte que son extrémité supérieure conduise dans l'environnement extérieur ou dans l'espace supérieur du silo,
- l'injection de gaz sous pression, de préférence d'air comprimé, dans l'espace interne de la trémie à flux massique (1), et par
- la mesure de la pression de gaz avec au moins un manomètre (7) dans au moins une conduite séparée, essentiellement exempte de produit en vrac, débouchant dans la région intérieure de l'au moins une installation de détente de pression (3) au moins en partie ouverte vers le bas ou avec au moins un manomètre (7) dans l'au moins un canal vertical (15) fermé vers le haut et ouvert vers le bas.

2. Procédé selon la revendication 1,
**caractérisé par**
- une injection de gaz sous pression se produisant à intervalles dans l'espace interne de la trémie à flux massique (1),
- une mesure de la pression de gaz à l'intérieur du produit en vrac se trouvant à l'état fluide, s'effectuant à intervalles temporels, approximativement seulement lors du changement de l'état de fonctionnement défini par la hauteur de remplissage et le débit du produit en vrac, et
- la commande de l'injection de gaz sous pression par un appareil de commande,
la quantité de gaz sous pression injectée, la durée d'un intervalle d'injection individuel et les espacements des intervalles d'injection pour la valeur de pression de gaz mesurée et l'état de fonctionnement donné étant commandés pour éviter une fluidisation du produit en vrac de telle sorte que par expérience, on ne descende pas au cours d'un déroulement ultérieur en dessous d'une valeur de dépression établie préalablement.

3. Procédé selon la revendication 1,
**caractérisé par**
- une mesure s'effectuant en continu de la pression de gaz à l'intérieur du produit en vrac se trouvant à l'état fluide, et
- une régulation de la pression de gaz à l'intérieur du produit en vrac se trouvant à l'état fluide dans un circuit de régulation avec la pression de gaz en tant que grandeur de régulation et le débit volumique du gaz sous pression injecté, pouvant être modifié par au moins une soupape (9), en tant que grandeur de réglage,
- la valeur de consigne pour la pression de gaz étant ajustée entre une valeur limite supérieure en dessous de laquelle un équilibrage de la dépression dans l'espace interne de la trémie à flux massique (1) uniquement par le biais de la conduite d'équilibrage de pression (5) ne s'effectue plus rapidement et plus suffisamment uniformément, et une valeur limite inférieure en dessous de laquelle, suite à une dépression relativement forte, une fluidisation du produit en vrac se produit et
- la pression de gaz étant régulée de telle sorte qu'elle ne passe à aucun moment en dessous de la valeur limite inférieure.

4. Procédé selon l'une quelconque des revendications 1 à 3,
**caractérisé par**
l'injection de gaz sous pression dans l'espace interne de la trémie à flux massique (1) par une pluralité de buses (8),
- les buses (8) étant disposées à différentes hauteurs de manière répartie au niveau de la paroi de la trémie à flux massique (1) le long de la périphérie et/ou
- au cas où la trémie à flux massique (1) présente au moins une installation de détente de pression (3), étant disposées au moins au niveau de l'au moins une installation de détente de pression (3) et/ou
- au cas où la trémie à flux massique (1) présente au moins une trémie interne (14), étant disposées au niveau de l'au moins une trémie interne (14), et
- l'alimentation des buses (8) en gaz sous pression pouvant être variée individuellement pour chaque buse (8) par des soupapes (9).

5. Trémie à flux massique (1) pour décharger d'un silo un produit en vrac à grain fin fluidisable, présentant :
au moins une installation de détente de pression (3) au moins en partie ouverte vers le bas ou au moins une trémie interne (14), qui est supportée par au moins un canal vertical (15), fermé vers le haut et ouvert vers le bas contre la paroi de la trémie à flux massique (1),
au moins une buse (8) pour l'injection de gaz sous pression, de préférence d'air comprimé, dans l'espace interne de la trémie à flux massique (1), **caractérisée en ce**
- **qu'**il est prévu au moins une conduite d'équilibrage de la pression (5) pour réduire la dépression de gaz relative à l'intérieur du produit en vrac se trouvant à l'état fluide par rapport à la pression de gaz dans l'environnement extérieur ou dans l'espace supérieur du silo,
- l'au moins une conduite d'équilibrage de pression (5) présentant une extrémité inférieure et une extrémité supérieure,
- l'extrémité inférieure de l'au moins une conduite d'équilibrage de pression (5) étant ouverte et étant disposée dans la région intérieure de l'installation de détente de pression (3) ou dans l'au moins un canal vertical (15), et
- l'extrémité supérieure de l'au moins une conduite d'équilibrage de pression (5) étant disposée dans l'environnement extérieur de la trémie à flux massique (1) ou pendant le fonctionnement dans l'espace supérieur du silo, et en ce
- qu'il est prévu au moins un manomètre (7) pour la mesure de la pression de gaz dans au moins une conduite séparée, essentiellement exempte de produit en vrac, débouchant dans la région interne de l'au moins une installation de détente de pression (3) au moins en partie ouverte vers le bas ou au moins un manomètre (7) pour la mesure de la pression de gaz dans l'au moins un canal vertical (15) fermé vers le haut et ouvert vers le bas.

6. Trémie à flux massique (1) selon la revendication 5,
**caractérisée en ce qu'**il est prévu,
- au niveau de la paroi de la trémie à flux massique (1) et/ou
- au cas où la trémie à flux massique (1) présente au moins une installation de détente de pression (3), au niveau de l'installation de détente de pression (3) et/ou
- au cas où la trémie à flux massique (1) présente au moins une trémie interne (14), au niveau de la trémie interne (14),
au moins une buse (8) pour injecter du gaz sous pression dans l'espace interne de la trémie à flux massique (1) et, pour chaque buse (8), au moins une soupape (9) pour ajuster l'alimentation en gaz sous pression à la buse (8),
la pression de gaz à l'intérieur du produit en vrac se trouvant à l'état fluide étant intégrée en tant que grandeur de régulation et le débit volumique injecté du gaz sous pression étant intégré en tant que grandeur de réglage dans un circuit de régulation.

7. Trémie à flux massique (1) selon l'une quelconque des revendications 5 à 6,
**caractérisée en ce que**
l'extrémité supérieure de l'au moins une conduite d'équilibrage de pression (5) est fermée avec un tuyau filtrant perméable à l'air (6).
